# EUROPÄISCHE PATENTANMELDUNG

(11) **EP 1 775 495 A2**
(43) Veröffentlichungstag der Anmeldung: **18.04.2007**
(21) Anmeldenummer: 06018426.4
(22) Anmeldetag: 04.09.2006
(51) Int. Cl.: F16F 9/512, F16F 9/516

(54) **Schwingungsdämpfer mit verstellbarer Dämpfkraft**

(30) Priorität: 13.10.2005 DE 102005048949
(71) Anmelder: ZF FRIEDRICHSHAFEN AG, 88046 Friedrichshafen (DE)
(72) Erfinder: Förster, Andreas, 97422 Schweinfurt (DE); Wirth, Alfred, 97421 Schweinfurt (DE); Gilsdorf, Heinz-Joachim, 97499 Donnersdorf (DE); Kutsche, Thomas, 97422 Schweinfurt (DE)

(57) **Zusammenfassung**

Schwingungsdämpfer (1) mit verstellbarer Dämpfkraft, umfassend eine Kolbenstange (5), die in einem dämpfmittelgefüllten Zylinder (3) zusammen mit einem Kolben (7) axial beweglich angeordnet, wobei der Kolben den Zylinder in einen kolbenstangenseitigen (9) und einen kolbenstangenfernen (11) Arbeitsraum unterteilt, mit einem verstellbaren Dämpfventil (19), das über eine Fluidenverbindung (13) mit mindestens einem der beiden Arbeitsräumen angeschlossen ist, wobei dem verstellbaren Dämpfventil mindestens ein weiteres Ventil hydraulisch parallelgeschaltet ist und bezogen auf die Strömung des Dämpfmittels (37) zu dem verstellbaren Dämpfventil und dem mindestens einen weiteren Ventil wiederum in Reihe ein Dämpfventil (31) vorgeschaltet ist, das in Abhängigkeit der Strömungsgeschwindigkeit des Dämpfmediums in Schließrichtung bewegt wird.

## Beschreibung

Die Erfindung betrifft einen Schwingungsdämpfer mit verstellbarer Dämpfkraft gemäß dem Oberbegriff von Patentanspruch 1.

Die ältere DE 10 2004 054 474 beschreibt einen Schwingungsdämpfer mit verstellbarer Dämpfkraft, umfassend eine Kolbenstange, die in einem dämpfmittelgefüllten Zylinder zusammen mit einem Kolben axial beweglich angeordnet, wobei der Kolben den Zylinder in einen kolbenstangenseitigen und einen kolbenstangenfernen Arbeitsraum unterteilt, mit einem verstellbaren Dämpfventil, das über eine Fluidenverbindung ant mindestens einen der beiden Arbeitsräumen angeschlossen ist. Bezogen auf die Strömung des Dämpfmittels ist in Reihe zu dem verstellbaren Dämpfventil ein Dämpfventil angeordnet ist, das sich in Abhängigkeit der Strömungsgeschwindigkeit des Dämpfmediums in Schließrichtung bewegt. Dem verstellbaren Dämpfventil ist in der Form eines Bodenventils ein Druckbegrenzungsventil hydraulisch parallel geschaltet. Bei dieser Bauform tritt der Effekt auf, dass das in Abhängigkeit der Strömungsgeschwindigkeit des Dämpfmediums wirksame Dämpfventil in seiner Wirkung auch abhängig ist von dem nachgeschalteten verstellbaren Dämpfventil. Bei einer Kolbenstangeneinfahrbewegung in Verbindung mit einem maximalen Durchlass am verstellbaren Dämpfventil kann das geschwindigkeitsabhängige Dämpfventil bezogen auf das parallele Bodenventil schon bei einer kleineren Einfahrgeschwindigkeit eine Drosselposition einnehmen. Entsprechend größer wäre nach dem Schließen dann der Volumenstrom durch das Bodenventil. Nimmt das verstellbare Dämpfventil jedoch eine Betriebsstellung mit einer großen Dämpfkraft und Drosselwirkung ein, dann kann das geschwindigkeitsabhängig schließende Dämpfventil nahezu wirkungslos sein. Dieser Effekt wird deutlicher, wenn man sich das verstellbare Dämpfventil als ein vollständig blockierbares Dämpfventil vorstellt. Damit könnte auch kein Volumenstrom durch das geschwindigkeitsabhängig schließende Dämpfventil passieren. Diese Abhängigkeit zwischen dem verstellbaren Dämpfventil dem Druckbegrenzungsventil bzw. Bodenventil und dem geschwindigkeitsabhängig schließenden Dämpfventil bestimmt den Einsatzpunkt des geschwindigkeitsabhängigen Dämpfventils, so dass es sehr schwierig ist, das Schließverhalten des geschwindigkeitsabhängigen Dämpfventils zu bestimmen.

Aufgabe der vorliegenden Erfindung ist, das aus dem Stand der Technik beschriebene Problem der Aufteilung der Volumenströme aus dem kolbenstangenseitigen Arbeitsraum zu beheben.

Erfindungsgemäß wird die Aufgabe dadurch gelöst, dass bezogen auf die Strömung des Dämpfmittels zu dem verstellbaren Dämpfventil und dem mindestens einen weiteren Ventil in Reihe zu beiden Dämpfventilen ein Dämpfventil vorgeschaltet ist, das sich in Abhängigkeit der Strömungsgeschwindigkeit des Dämpfmediums in Schließrichtung bewegt.

Der große Vorteil besteht darin, dass durch die Voranstellung des geschwindigkeitsabhängig schließenden Dämpfventils eine unabhängig vom verstellbaren Dämpfventil bestimmbare Dämpfkraftkennlinie des Schwingungsdämpfers. Das Volumen, das durch das geschwindigkeitsabhängig schließende Dämpfventil verdrängt wird, entspricht dem Volumen der einfahrenden Kolbenstange. Die vorliegende Dämpfkraft hängt dann nur noch von der Kolbenstangengeschwindigkeit und der Dämpfkraftkennlinie des geschwindigkeitsabhängig schließenden Dämpfventils ab. Welche Aufteilung das verdrängte Volumen nach dem Austritt aus dem geschwindigkeitsabhängig schließenden Dämpfventil erfährt, spielt keine Rolle. Folglich können das weitere Dämpfventil, also z. B. ein Bodenventil und das verstellbare Dämpfventil gezielter auf eine gewünschte Dämpfkraftkennlinie abgestimmt werden.

In weiterer vorteilhafter Ausgestaltung ist dem kolbenstangenfernen Arbeitsraum ein Verteilerelement nachgeordnet ist, an dem das verstellbare Dämpfventil und das mindestens eine weitere Dämpfventil angeschlossen sind, wobei zwischen dem Verteilerelement und dem kolbenstangenfernen Arbeitsraum eine Trennscheibe mit dem geschwindigkeitsabhängigen Dämpfventil vorliegt. Die Trennscheibe kann dabei als eine Ventilsitzfläche für das geschwindigkeitsabhängig schließende Dämpfventil dienen.

Es ist vorgesehen, dass das Verteilerelement als eine Verlängerung des dämpfmittelgefüllten Zylinders ausgeführt ist. Prinzipiell könnte das Verteilerelement auch in einem Schlauchabschnitt außerhalb des Schwingungsdämpfers angeordnet sein. Die Anbindung an den Zylinder minimiert jedoch etwaige Leckagefolgen.
Diese mehrteilige Lösung vereinfacht die Herstellung des Zylinders, indem für den kolbenstangenseitigen und den kolbenstangenfernen Arbeitsraum ein einfaches Rohr verwendet wird, mit einer Trennscheibe, die einteilig mit der Verlängerung ausgeführt ist, kann man besonders vorteilhaft ein Guss- oder Schmiedeteil verwenden.

Das Verteilerelement zentriert radial sich an dem Zylinder, so dass bei einem Schwingungsdämpfer in Zweirohrausführung keine Durchmesserabhängigkeit zu einem Behälterrohr besteht.

Damit keinesfalls eine Blockierung des Schwingungsdämpfers auftreten kann, ist dem geschwindigkeitsabhängigen Dämpfventil ein Druckbegrenzungsventil parallelgeschaltet.

Anhand der folgenden Figurenbeschreibung soll die Erfindung näher erläutert werden.

Es zeigt:
- Fig. 1: Ersatzschaubild des erfindungsgemäßen Schwingungsdämpfers
- Fig. 2 u. 3: Schnittdarstellungen durch den erfindungsgemäßen Schwingungsdämpfer
- Fig. 4: Detaildarstellung zu den Fig. 1 und 2

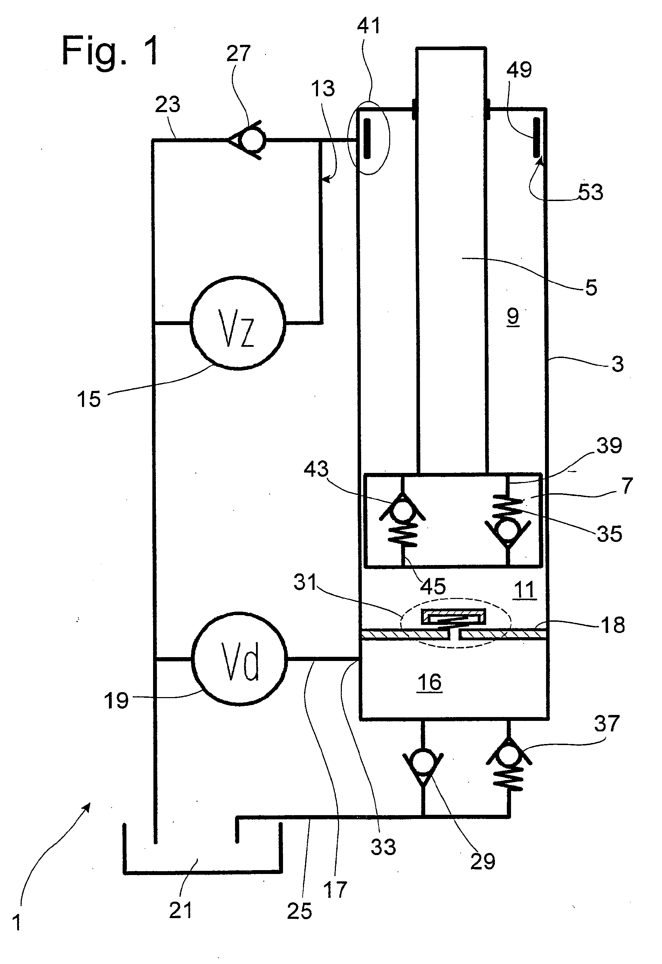

Die Fig. 1 zeigt ein Blockschaltbild von einem Schwingungsdämpfer 1, der einen dämpfmittelgefüllten Zylinder 3 umfasst, in dem eine Kolbenstange 5 zusammen mit einem Kolben 7 axial verschiebbar geführt ist. Der Kolben 7 unterteilt den Zylinder 3 in einen kolbenstangenseitigen Arbeitsraum 9 und einen kolbenstangenfernen Arbeitsraum 11. Im Prinzip kann es sich bei dem Kolben um einen einfachen Verdränger ohne Durchlasskanäle handeln. Der kolbenstangenseitige Arbeitsraum ist über eine Fluidenverbindung 13 mit einem verstellbaren Dämpfventil 15 verbunden. Dem kolbenstangenfernen Arbeitsraum 11 schließt sich ein Verteilerraum an, der über eine Fluidenverbindung 17 zu einem separat verstellbaren Dämpfventil 19 verfügt. Zwischen dem Verteilerraum 16 und dem kolbenstangenfernen Arbeitsraum 11 ist eine Trennscheibe 18 angeordnet. Das aus den jeweiligen Arbeitsräumen in die verstellbaren Dämpfventile verdrängte Dämpfmedium fließt in einen Ausgleichsraum 21. Sowohl der kolbenstangenseitige wie auch der kolbenstangenferne Arbeitsraum stehen über eine Rückflussleitung 23; 25 in Kombination mit einem in Fließrichtung zum Arbeitsraum öffnenden Rückschlagventil 27; 29 mit dem Ausgleichsraum in Verbindung.

Dem verstellbaren Dämpfventil 19, das bei einer Einfahrbewegung der Kolbenstange wirksam ist, ist bezüglich der Strömungsrichtung in Reihe ein Dämpfventil 31 vorgeschaltet, das in Abhängigkeit der Strömungsgeschwindigkeit des Dämpfmediums in Schließrichtung bewegt wird. Dem verstellbaren Dämpfventil 19 ist ein Druckbegrenzungsventil 37 parallel geschaltet, das ebenfalls dem geschwindigkeitsabhängig schließenden Dämpfventil in Reihe nachgeschaltet ist. Ein Druckbegrenzungsventil kann in einer Strömungsverbindung 39, z. B. im Kolben 7, zwischen den beiden Arbeitsräumen 9; 11 angeordnet sein.

Auch der kolbenstangenseitige Arbeitsraum 9 kann mit einem dämpfkrafterhöhend wirksamen Dämpfventil 41 bestückt sein, das in Reihe zum verstellbaren Dämpfventil 15 angeordnet ist. In diesem Fall ist ein Druckbegrenzungsventil 43 z. B. in einer Strömungsverbindung 45 im Kolben sinnvoll.

Beim normalen Schwingungsdämpferbetrieb fährt die Kolbenstange zusammen mit dem Kolben in den Zylinder 3 ein und komprimiert den kolbenstangenfernen Arbeitsraum 11. Das geschwindigkeitsabhängig schließende Dämpfventil 31 in der Trennscheibe 18 ist geöffnet, geschlossen ist dagegen das Rückschlagventil 29. In Abhängigkeit der gewünschten Dämpfkraft kann das gesamte im Arbeitsraum 11 unter Druck stehende Dämpfmittel über die Eintrittsöffnung 33 der Fluidenverbindung 17 in das verstellbare Dämpfventil 19 und/oder durch das geöffnete Druckbegrenzungsventil 37, das von einem an sich bekannten Bodenventil gebildet werden kann, weiter in den Ausgleichsraum 21 entweichen. Die Volumenstromverteilung zwischen dem verstellbaren Dämpfventil und dem Druckbegrenzungsventil bestimmt sich nach der momentanen Dämpfkrafteinstellung des Dämpfventils 19 im Verhältnis zum Druckbegrenzungsventil 37. Je nach Kolbenkonstruktion, z. B. als einfacher Verdränge oder als konventionelles Dämpfventil kann Dämpfmedium über das geöffnete Rückschlagventil 27 oder durch den Kolben 7 in den ringförmigen kolbenstangenseitigen Arbeitsraum fließen, damit dort kein Unterdruck entsteht.

Bei einer extremen Einfahrgeschwindigkeit der Kolbenstange 5 nimmt das geschwindigkeitsabhängig schließende Dämpfventil 31 die Schließstellung ein, wobei damit nicht unbedingt die vollständige Blockade zwischen dem kolbenstangenfernen Arbeitsraum und dem Verteilerraum 16 gemeint ist. Das in den Verteilerraum verdrängte Volumen teilt sich ebenso wie im Normalbetrieb zwischen dem verstellbaren Dämpfventil 19 und dem Druckbegrenzungsventil 37 in Richtung des Ausgleichsraums 21 auf. Der Einsatzpunkt des geschwindigkeitsabhängig schließenden Dämpfventils ist deshalb ausschließlich von der Geschwindigkeit der Kolbenstange abhängig, jedoch keinesfalls von der Einstellung des verstellbaren Dämpfventils, so dass der besagte Einsatzpunkt einfach festzulegen ist.

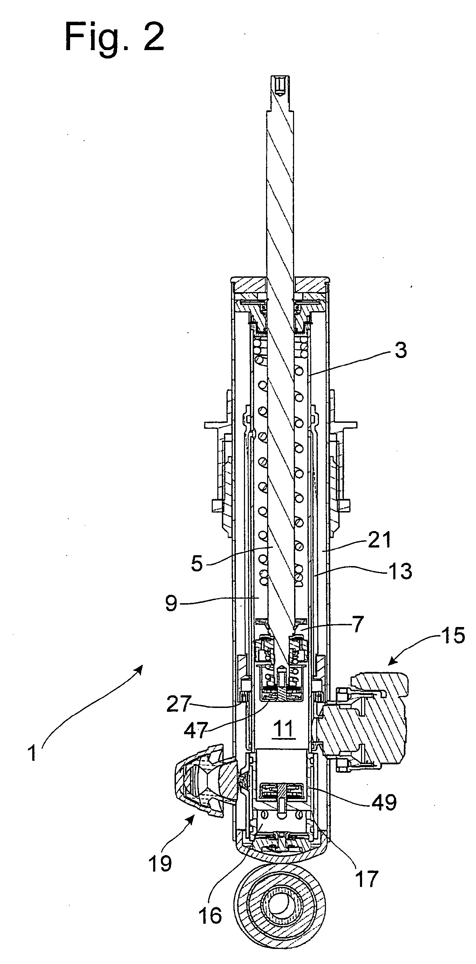

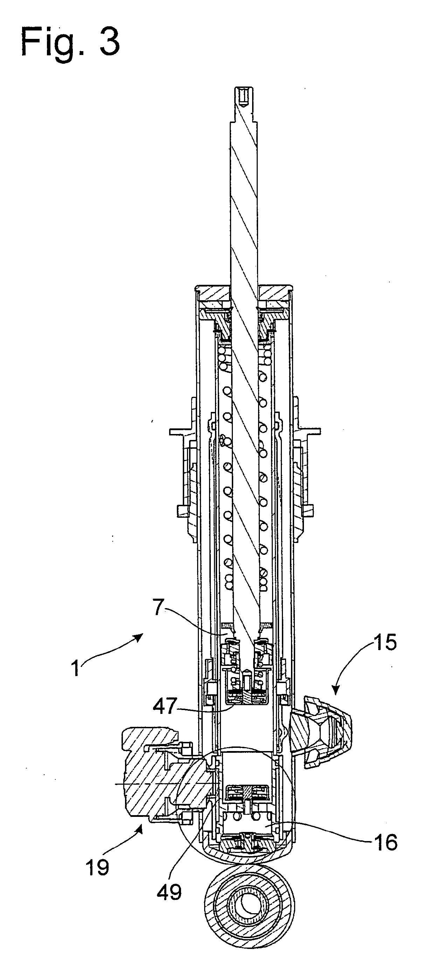

Die Figuren 2 und 3 zeigen eine Konstruktionszeichnung eines erfindungsgemäßen Schwingungsdämpfers 1 entsprechend dem Ersatzschaubild nach Fig. 1. Der Bereich der verstellbaren Dämpfventile 15; 19 ist vereinfacht dargestellt, da der konstruktive Aufbau bereits aus der DE 197 22 216 C1 bekannt ist. Der Kolben 7 ist als konventioneller Dämpfkolben ausgeführt und verfügt ebenfalls über ein geschwindigkeitsabhängig schließendes Dämpfventil 47, wie es in der DE 10 2004 054 474, Fig. 5, beschrieben ist, deren Offenbarungsgehalt Teil dieser Figurenbeschreibung ist. Des Weiteren ist den Figuren 2 und 3 zu entnehmen, dass der Verteilerraum 16 von einem Verteilerelement 49 gebildet wird, so dass der Zylinder in Axialrichtung zumindest zweiteilig ausgeführt ist. Das Verteilerelement 49 zentriert sich mit seiner Außenwandung am Innendurchmesser des Zylinders 3.

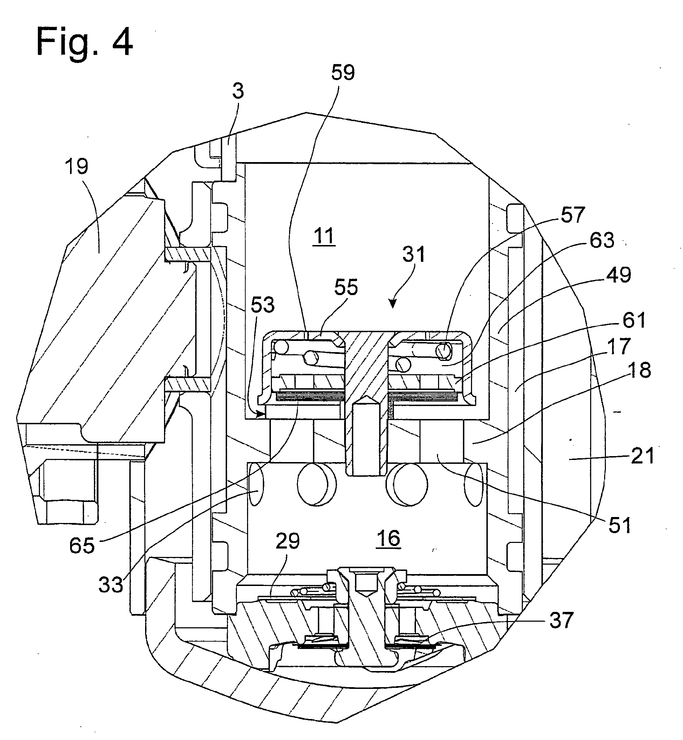

Die Fig. 4 zeigt, dass das Verteilerelement 49 als ein Rohrkörper mit einer einteiligen Trennscheibe 18 ausgeführt ist. Die Trennscheibe 18 enthält eine Anzahl von Durchgangsöffnungen 51, deren Zugangsquerschnitt 53 von einem im kolbenstangenfernen Arbeitsraum 11 angeordnetem topfförmigen Ventilkörper 55 verkleinert werden kann. Eine Feder 57 spannt den Ventilkörper 55 in Öffnungsrichtung vor. In einem Boden des Ventilkörpers 55 ist mindestens eine Drosselöffnung 59 ausgeführt, die einen Dämpfmediumstrom zu einer Drosselscheibe 61 zulässt, deren Kanäle 63 von mindestens einer Ventilscheibe 65 abgedeckt werden, so dass die Drosselöffnungen 59 in Verbindung mit der Drosselscheibe 61 und der mindestens einen Ventilscheibe 65 ein Druckbegrenzungsventil bilden, das dem geschwindigkeitsabhängig schließenden Dämpfventil 31 parallelgeschaltet ist.

Bei einer großen Strömungsgeschwindigkeit, verursacht durch eine große Kolbenstangengeschwindigkeit in Einfahrrichtung, sinkt der Druck im Zugangsbereich 53 zwischen der Trennwand 18 und dem Rand des topfförmigen Ventilkörpers 55, so dass der vorhandene Druck im kolbenstangenfernen Arbeitsraum 11 den Ventilkörper 55 in Richtung der Trennscheibe 18 bewegt. Wird ein vorbestimmtes Druckniveau überschritten, dann kann das Dämpfmedium durch die Drosselöffnungen 59 und die Drosselscheibe 61 strömen und die Ventilscheibe 65 von der Drosselscheibe 61 abheben lassen. Das verdrängte Dämpfmedium gelangt in den Verteilerraum 16 und kann dann in Abhängigkeit des verstellbaren Dämpfventils 19 und des weiteren Dämpfventils 37, das als ein Bodenventil ausgeführt ist, in den Ausgleichsraum 21 fließen.

## Patentansprüche

1. Schwingungsdämpfer mit verstellbarer Dämpfkraft, umfassend eine Kolbenstange, die in einem dämpfmittelgefüllten Zylinder zusammen mit einem Kolben axial beweglich angeordnet, wobei der Kolben den Zylinder in einen kolbenstangenseitigen und einen kolbenstangenfernen Arbeitsraum unterteilt, mit einem verstellbaren Dämpfventil, das über eine Fluidenverbindung ant mindestens einen der beiden Arbeitsräumen angeschlossen ist, wobei dem verstellbaren Dämpfventil mindestens ein weiteres Ventil hydraulisch parallelgeschaltet ist,
**dadurch gekennzeichnet,**
**dass** bezogen auf die Strömung des Dämpfmittels zu dem verstellbaren Dämpfventil (19) und dem mindestens einen weiteren Ventil (37) zu beiden Ventilen (19; 37) in Reihe ein Dämpfventil (31) vorgeschaltet ist, das sich in Abhängigkeit der Strömungsgeschwindigkeit des Dämpfmediums in Schließrichtung bewegt.

2. Schwingungsdämpfer nach Anspruch 1,
**dadurch gekennzeichnet,**
**dass** dem kolbenstangenfernen Arbeitsraum (11) ein Verteilerelement (49) nachgeordnet ist, an dem das verstellbare Dämpfventil (19) und das mindestens eine weitere Dämpfventil (37) angeschlossen sind, wobei zwischen dem Verteilerelement (49) und dem kolbenstangenfernen Arbeitsraum (11) eine Trennscheibe (18) mit dem geschwindigkeitsabhängigen Dämpfventil (31) vorliegt.

3. Schwingungsdämpfer nach Anspruch 1,
**dadurch gekennzeichnet,**
**dass** das Verteilerelement (31) als eine Verlängerung des dämpfmittelgefüllten Zylinders (3) ausgeführt ist.

4. Schwingungsdämpfer nach Anspruch 3,
**dadurch gekennzeichnet,**
**dass** sich das Verteilerelement (49) an dem Zylinder (3) radial zentriert.

5. Schwingungsdämpfer nach Anspruch 2,
**dadurch gekennzeichnet,**
**dass** die Trennscheibe (18) einteilig mit der Verlängerung (49) ausgeführt ist.

6. Schwingungsdämpfer nach Anspruch 1,
**dadurch gekennzeichnet,**
**dass** dem geschwindigkeitsabhängigen Dämpfventil (31) ein Druckbegrenzungsventil (59; 61; 63; 65) parallelgeschaltet ist.
